# EUROPEAN PATENT APPLICATION

(11) **EP 2 744 215 A1**
(43) Date of publication of application: **18.06.2014**
(21) Application number: 12306597.1
(22) Date of filing: 17.12.2012
(51) Int. Cl.: H04N 21/2343, H04N 21/258, H04N 21/442, H04N 21/6377

(54) **Method for streaming AV content and method for presenting AV content**

(71) Applicant: Thomson Licensing, 92130 Issy-les-Moulineaux (FR)
(72) Inventor: Gouache, Stéphane, 35000 Rennes (FR); Bichot, Guillaume, 35630 La Chapelle Chaussee (FR); Gad Moshe, Berger, Dayton, 08810 (US)
(74) Representative: Schiller, Harald

(57) **Abstract**

Methods are described for streaming (107) a requested AV content from an AV content server (102) to a client device (101) and for presenting the requested AV content at the client device (101), where after receiving (106) a streaming request one of several precomputed formats available at an AV content repository (104) is retrieved and is streamed to the client device (101). For improving the user experience while preserving an immediate start of the video, a transcoding utility (103) is then requested to transcode a master format of the requested AV content into the requested format. As soon as the transcoded content is being received, it is being streamed instead of the precomputed format, and the client device (101) is instructed where to seamlessly transition the presentation.

## Description

### Field of the invention

The present invention relates to methods for streaming and presenting AV content, in particular methods for streaming and presenting in systems where the AV content is available in a set of precomputed formats.

### Background of the invention

With the increase in bandwidth to the home, e.g. via DSL or 3G, streaming video has become very popular. Internet Service Providers also denoted as ISPs and mobile network operators are offering it as part of their service bundles. Users are progressively getting used to buying movies or other audiovisual content or AV content through their internet access, to watch them either on a handheld device or on their TV set. Identical content may have to be repurposed for different target devices. Such repurposing involves transcoding, which often changes the video and audio codecs used for compressing a video, but other transformations such as resizing are also possible. A transcoding or recompression process can also increase the compression ratio and thus decrease the bit rate to meet the performance or bandwidth constraint of a given local network or end-user device.

Recently, different companies have started to offer a transcoding service "in the cloud". This means that network operators, ISPs or content distributors, commonly termed "operators" in the following, in general no longer need to own the computing power or hardware infrastructure needed to perform the transcoding operations, they can buy this service from an external company.

There is an increasing range of different viewing devices with distinct rendering capabilities like TV, HD1080i/720p, PC, Personal Multimedia Player, Smartphone, and an expanding supply of different contents. For live content, operators generally decide to support a set of resolutions/bit rates to match a range of devices as large as possible. This implies a lot of processing and is only possible for a limited number of channels as the amount of processing grows proportional to the number of channels and the number of resolutions provided per channel. For stored content like Video On Demand VOD, operators may decide to support SD, HD and perhaps a couple of formats corresponding to popular devices such as the iPhone.

In addition to providing distinct resolutions for viewing devices of different resolution capabilities, recently techniques like the one known as HTTP Adaptive Streaming or HAS, extend the set of versions by providing different bitrates of each resolution, all provided with entry points at identical temporal positions. Using these, viewing devices can adapt to variability of network conditions by seamlessly switching from one bitrate version to a higher or lower bitrate version. Providing several bitrate versions of several screen resolutions and or temporal resolutions, operators can easily end up with more than hundred versions to be provided for each content, some of which will never be used.

However, a user having a device that does not match exactly one of the pre-computed resolutions will have to watch an upscaled or downscaled video, which may result in an unnecessarily impaired viewing experience. One solution is to precompute more resolutions, which entails more storage and more computing and hence is more expensive at the provider side. Another solution is to transcode a requested AV content on-the-fly to meet the client device capabilities. This implies hosting lots of expensive processing power whose capacity is difficult to evaluate and that may be under-used on the average. The transcoding process could also take place offline in another facility. For any kind of transcoding on-the-fly, the client, after a period of waiting, would be notified when the content is ready. This necessity to wait would render the service less user friendly.

Patent Application Publication US 2006/0026302 A1 by Bennett et al. purports to disclose apparatus and method for media distribution and consumption within home and mobile entertainment environments. A media server component serves media programs to a plurality of client media players and responds to channel conditions, recipient characteristics and user preferences by either delivering a stored program or transcoding the stored program in real time. For the transcoding, it is disclosed to adapt viewing window size and/or screen resolution to accommodate changes in connectivity and to support unexpected throughput variation in real time.

Patent Application Publication US 2008/0195698 A1 by Stefanovic et al. purports to disclose a system and method for adapting and presenting information from web pages containing content designed for large screen computers to display on a handheld device. The disclosed method comprises receiving a request to transcode a video file into a format that is displayable on the device, transcoding, and sending a notification indicating that the video file has been transcoded. While waiting for the video to be transcoded, the user may browse other websites. A user can request that a video file be transcoded for viewing on a client device and then return at a later time to the client device to retrieve the transcoded video file.

Improvements in user experience which preserve an immediate start of the video, and reduce infrastructure costs for the service operator, are thus desirable.

### Summary of the Invention

It is proposed to fill the gaps between existing pre-computed resolutions of content. A client device requests a content from an operator, indicating also a requested format that best suits the client device's capabilities with respect to resolution and bit rate. The operator immediately starts streaming an available pre-computed resolution of the content that best matches the client device's capabilities. The client device can start playing this content immediately. If the available pre-computed resolution of the content differs from the requested format, the operator simultaneously initiates the transcoding of the content from a master format to the requested format. This transcoding can take place at the operator, at an external facility to reduce the operator's infrastructure investment, or even at a suitable device within a client's home network. When the transcoding is done, which normally takes a few minutes, the requested format of the content is made available to the client device. The client device seamlessly switches its presentation from showing the pre-computed resolution to showing the requested format.

This is achieved by a method for streaming a requested AV content from an AV content server to a client device according to this invention, where a streaming request comprising information to identify the requested AV content and to identify a requested format is received from the client device; a set of precomputed formats that are available at a first AV content repository is identified for the requested AV content; among the precomputed formats that one is selected as a selected format which best matches the requested format; the selected format of the requested AV content is retrieved from the first AV content repository; and the selected format of the requested AV content is streamed to the client device. If the selected format differs from the requested format, a request is sent to a transcoding utility, that a master format of the requested AV content be transcoded into the requested format, and that the requested format be made available to the client device; and when the requested format is available at the client device, the streaming of the selected format is stopped.

For presenting at a client device, according to this invention, a requested AV content thus streamed; the client device receives the selected format of the requested AV content from the AV content server; the client device scales the selected format of the requested AV content into a presentable format of the requested AV content; the client device presents the presentable format of the requested AV content; the client device receives the requested format of the requested AV content; and the client device seamlessly transits the presentation from the presentable format of the requested AV content to the requested format of the requested AV content.

Requesting from the transcoding utility that the master format of the requested AV content be transcoded into the requested format can be performed in at least **three different ways:**

In a **first way,** the AV content server retrieves the master format of the requested AV content from the first AV content repository; and provides it to the transcoding utility.

In a **second way,** the AV content server provides the information to identify the requested AV content to the transcoding utility; and the transcoding utility then retrieves the master format of the requested AV content from the first AV content repository.

In a **third way,** the AV content server provides the information to identify the requested AV content to the transcoding utility; and the transcoding utility retrieves the master format of the requested AV content from a second AV content repository which may or may not be accessible from the AV content server. Scaling the selected format of the requested AV content into a format that is presentable at the client device, will typically comprise, alone or in combination, spatial upsampling respectively downsampling; repetition of images and/or skipping of images and or temporal interpolation of images with or without motion compensation; color processing; and dynamic range processing.

When a content is transcoded from one format to another, it will be available with a transcoding delay which may depend on such factors as the content format itself, the processing power of the transcoding utility, the number and nature of transcoding processing steps to be performed, and the characteristics of the involved data connections. Advantageously, the method for streaming a requested AV content according to the invention can be further improved if an estimated transiting position is derived and is provided to the transcoding utility; and the transcoding utility begins the transcoding at an entry point that is close to and prior to the estimated transiting position. With other words, in this further improvement the transcoding utility is not requested to transcode that part of the requested AV content which is between the start of the requested AV content and the entry point. With still other words, it is thus avoided to waste the time that it would take to transcode those parts of the content that will knowingly never be presented in the requested format.

In connection with the question of where the transcoding takes place, making available the requested format of the requested AV content to the client device can manifest itself in one of several forms:

In a **first form,** the requested format of the requested AV content is sent from the transcoding utility to the AV content server, and the AV content server streams the requested format to the client device. The AV content server may locally store the requested format, which is advantageous because if one assumes that the same format is likely to be requested by other, similar client devices in near future, it avoids repeated identical transcoding acts.

In a **second form,** the transcoding utility sends the requested format directly to the client device via a public network. This form may be appropriate when the transcoding utility is remote from the AV content server as well as from the client device. This is likely to minimize further the delay until the requested format is available at the client device, compared to the two-step sending of the first form.

A **third form** of making available the requested format is suitable when the transcoding utility is a suitable device within the client's home network. In this form, sending the master format to the transcoding utility uses the same network as used for streaming the selected format, and thus does constitute a limiting factor. Conversely, "sending" the requested format from the transcoding utility to the client device takes place completely within the client's home network and thus is not critical.

In this form, it may be advantageous to use as the master format not a full resolution or lossless coded version of the requested AV content, but a version that is just slightly better than the requested format that is to be generated from it, in order to account for network constraints on the way to the transcoding utility. Even then, the advantage according to the invention consists in the fact that, with some delay after the start of the presentation, the job of providing the necessary format changes will be handed over from the client device having assumedly limited processing capability to a more suitable device within the client's home network, which assumedly can produce a slightly better quality.

### Drawings

Exemplary embodiments of the invention are illustrated in the drawings and are explained in more detail in the following description.

In the figures:
- **Fig. 1**: illustrates components of a first AV content streaming system.
- **Fig. 2**: illustrates components of a second AV content streaming system.
- **Fig. 3**: illustrates components of a third AV content streaming system.

### Exemplary embodiments

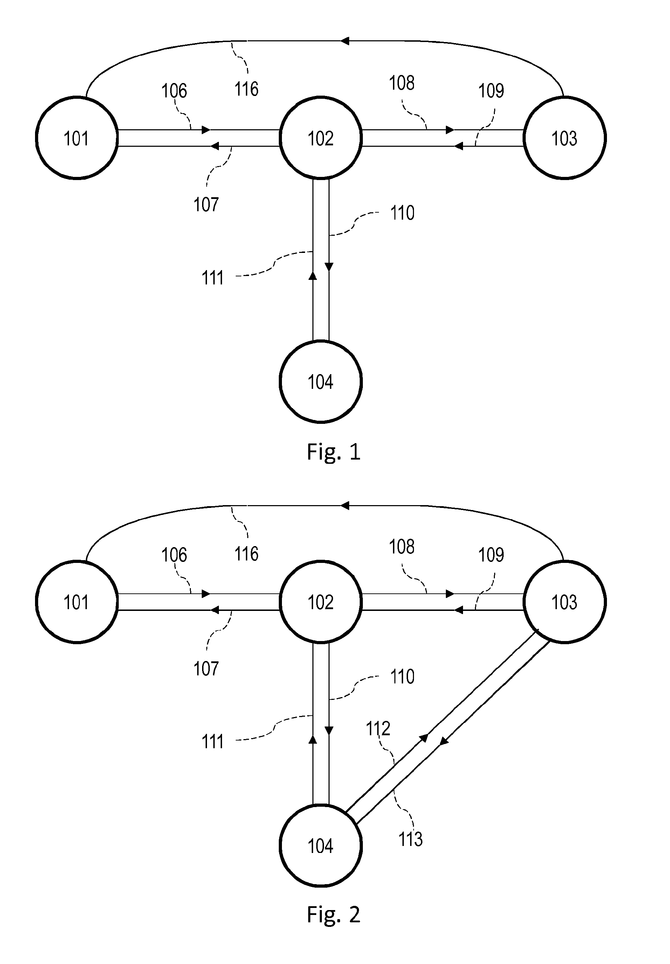

**Fig. 1** illustrates components of a first AV content streaming system as used in a **first embodiment** of the invention. The AV content streaming system comprises a client device 101, an AV content server 102, and a transcoding utility 103. The client device 101 is connected 106, 107 in both directions with the AV content server 102, and the AV content server 102 is connected 108 to the transcoding utility 103. The transcoding utility 103 may be connected 109 to the AV content server 102, or alternatively, it may be connected 116 to the client device 101. The first AV content streaming system comprises a first AV content repository 104 that is connected 110, 111 in both directions to the AV content server 102.

The processing steps of the **first embodiment** can be described as follows:
**A)** The client device 101 requests 106 an AV content from the AV content server 102, indicating the requested format.
**B)** The AV content server 102 connects 110 to the first AV content repository 104 that holds a range of precomputed formats of different resolution, codec and bit rate combination, to fetch 111 the most appropriate version of the requested AV content for the client device 101. Typically, the most appropriate version of the requested AV content would be that format among the precomputed formats, which has the codec as indicated in the requested format, a bit rate lower or equal to the bit rate indicated in the requested format, and a resolution as close as possible to the one indicated in the requested format. With respect to spatial resolution, those versions may be preferable, which are related to the resolution indicated in the requested format by a factor that is integer or a fraction of small integers.
**C)** In parallel to fetching the most appropriate version of the requested AV content, a master version of the requested AV content is also retrieved 111 from the first AV content repository 104. "Master version" may denote a version with maximum or high resolution and a lossless or nearly lossless compression. This may be the format in which the AV content has been produced, or any other suitable format derived therefrom. If the transcoding is done in a suitable device within the client's home network, it may be more appropriate to use as master version one which is only slightly better than the requested format, in order to account for network constraints.
**D)** The AV content server 102 then streams 107 the most appropriate format of the requested AV content to the client device 101. The client device 101 starts presenting the most appropriate format of the requested AV content, if necessary after internally scaling it into a presentable format.
**E)** Concurrent to streaming 107 the most appropriate format of the requested AV content, the AV content server 102 provides 108 the master version of the requested AV content and information about the requested format to the transcoding utility 103, thereby requesting 108 that the transcoding utility 103 shall transcode the AV content into the requested format. The transcoding utility 103 starts the transcoding process. Transcoding may comprise, alone or in combination, spatial upsampling, spatial downsampling; repetition of images, skipping of images, temporal interpolation of images with or without motion compensation, color processing, dynamic range processing, transcoding from one codec standard into another one, picture type conversion, changing of data rate, quantization or re-quantization.

The subsequent step of providing the transcoded AV content can be embodied in at least two different ways, depending on whether the transcoding utility 103 is situated away from or within the client's home network.
**F1)** If the transcoding utility 103 is situated away from the client's home network, it provides 109 the requested format back to the AV content server 102. The AV content server 102 starts forwarding 107 the requested format of the AV content to the client device 101.
**F2)** If the transcoding utility 103 is situated within the client's home network, the transcoding utility 103 provides 116 the requested format of the requested AV content directly to the client device 101.
**G)** The client device 101, when it starts to receive the requested format of the requested AV content - either from the AV content server 102 as in step **F1),** or directly from the transcoding utility 103 through the home network as in step **F2)** - transits its presentation, in a seamless manner, from the most appropriate format to the requested format at the next suitable entry point in the streams.

With respect to the Client Request, several methods exist for requesting a content from a streaming server. The most popular ones are HTTP and RTSP. Some typical methods for indicating the desired bit rate, resolution and codec include adding one or more HTTP headers to the request or including this information as parameters in the request URL. Other methods such as including a cookie holding this information can be used as well. RTSP is a request-response protocol similar to, and derived from HTTP. This or similar mechanisms can be used. As an example, a client request may look like this:
GET
   http://movie.server.net/?id=fastandfurious&resolution=640x480&bi trate=1200000&codec=H264Main HTTP/1.1

Here the client requests the AV content named "Fast and Furious" at a resolution of 640x480 pel, encoded using H.264 Main Profile at 1.2Mbps.

With respect to the Precomputed Formats, the aim of the precomputed formats is to have, with limited resources, a version of each AV content that is at least acceptable for every possible client. This requirement is similar to what mobile network operators are trying to achieve to satisfy the most customers. This results in selecting a baseline codec like H.264 baseline that will be supported by all clients, a small number of resolutions and a relatively low bit rate. Embodiments of this invention can be described based on any assumption about the different codecs and formats of the Precomputed Formats. For ease of illustration it is assumed here without loss of generality that all clients in the exemplary embodiment support at least H.264 baseline.

Another influence that arises from the need to switch between two versions is, that it is preferable that all the different precomputed Formats of an AV content be GOP aligned. With other words, it is advantageous that they have all or at least some of their key frames at the same relative temporal position in the stream.

As an example of a set of Precomputed Formats, a first AV content repository could contain each of its AV contents in three versions, namely:
- Resolution of 320x240, bitrate of 300kbps, H.264 baseline coding, having a key frame every 2 seconds;
- Resolution of 720x576; bitrate of 800kbps, H.264 baseline coding, having a key frame every 2 seconds; and
- the master version in lossless coding.

A **second embodiment** of the invention is illustrated using the second AV content streaming system shown in **Fig. 2****.** The client device 101 has data connections 106, 107 in both directions with the AV content server 102. The AV content server 102 is connected 108 to the transcoding utility 103. The transcoding utility 103 may be connected 109 to the AV content server 102, or alternatively, it may be connected 116 to the client device 101. The AV content server 102 has data connections 110, 111 in both directions with the first AV content repository 104. The transcoding utility 103 has data connections 112, 113 in both directions with the first AV content repository 104.

Instead that the AV content server 102 retrieves 110, 111 the master version of the requested AV content from the first AV content repository 104 and provides 108 it to the transcoding utility 103, the AV content server 102 in the **second embodiment** just provides 108 an identification of the requested AV content to the transcoding utility 103, and the transcoding utility 103 then retrieves 113, 112 the master version of the requested AV content from the first AV content repository 104. The remainder of the steps are as in the first embodiment. In the second embodiment, too, if the transcoding utility is situated away from the client's home network, the requested format is provided 109 to the AV content server, which in turn forwards 107 it to the client device. Conversely, if the transcoding utility is situated within the client's home network, the requested format of the requested AV content is provided 116 directly from the transcoding utility to the client device.

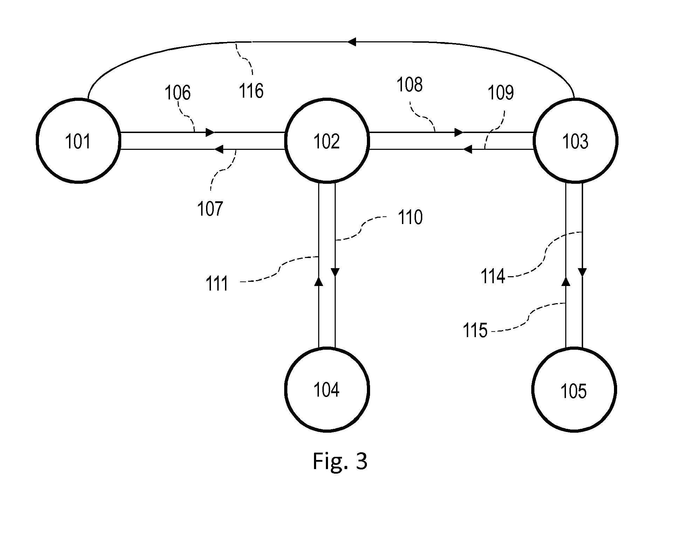

A **third embodiment** of the invention is illustrated using the third AV content streaming system shown in **Fig. 3****.** The third AV content streaming system comprises the client device 101, the AV content server 102, the transcoding utility 103, the first AV content repository 104, and a second AV content repository 105. The client device 101 has data connections 106, 107 in both directions with the AV content server 102. The AV content server 102 is connected 108 to the transcoding utility 103. The transcoding utility 103 may be connected 109 to the AV content server 102, or alternatively, it may be connected 116 to the client device 101. The AV content server 102 has data connections 110, 111 in both directions with the first AV content repository 104. The transcoding utility 103 has data connections 114, 115 in both directions with the second AV content repository 105. The transcoding utility 103 does not have direct data connections with the first AV content repository 104.

The processing steps of the **third embodiment** can be described as follows:
**A)** The client device 101 requests 106 an AV content from the AV content server 102, indicating the requested format.
**B)** The AV content server 102 connects 110 to the first AV content repository 104 to fetch 111 the most appropriate version of the AV content. The AV content server 102 streams 107 the most appropriate version of the AV content to the client device 101. The client device 101 starts presenting the most appropriate format of the requested AV content, if necessary after internally scaling it into a presentable format.
**C)** The AV content server 102 provides 108 an identification of the requested AV content and information about the requested format to the transcoding utility 103.
**D)** The transcoding utility 103 then retrieves 114, 115 the master version of the AV content from the second AV content repository 105. Same as in the first embodiment, "master version" may denote a version with maximum or high resolution and a lossless or nearly lossless compression, or, in the case where transcoding is done within the client's home network, it may denote a version which is only slightly better than the requested format.
**E)** The transcoding utility 103 starts to transcode the master version of the AV content into the requested format.

The subsequent step can be embodied in at least two different ways, depending on whether the transcoding utility 103 is situated away from or within the client's home network.
**F1)** If the transcoding utility 103 is situated away from the client's home network, it provides 109 the requested format to the AV content server 102. The AV content server 102 starts sending 107 the requested format of the AV content to the client device 101.
**F2)** If the transcoding utility 103 is situated within the client's home network, the transcoding utility 103 provides 116 the requested format of the requested AV content directly to the client device 101.
**G)** The client device 101, when it starts to receive the requested format of the requested AV content - either from the AV content server 102 as in step **F1),** or directly from the transcoding utility 103 through the home network as in step **F2)** - transits its presentation, in a seamless manner, from the most appropriate format to the requested format at the next suitable entry point in the streams.

Starting to receive an AV content constitutes an implicit way of notifying that this AV content is now available. In addition to such implicit notification, it may be advantageous to provide explicit, in advance notification. Such notification may indicate that and when a resolution change or codec change is imminent. Knowing this slightly in advance may help the client device to render the seamless transition from one content format to the other even more unnoticeable. Conceptually, such in advance notification proceeds on the same data connections where the content format is being sent:

In those embodiments where the transcoding utility 103 is situated away from the client's home network, the transcoding utility 103 notifies 109 the AV content server 102 in advance that and when the transcoded version of the AV content is ready to be streamed, and the AV content server 102 notifies 107 the client device 101 in advance that and when a better resolution is now available for him, and that a format change is imminent.

In those embodiments where the transcoding utility 103 is situated within the client's home network, the transcoding utility 103 directly notifies 116 the client device 101 in advance that and when a better resolution is now available for him, and that a format change is imminent.

With respect to transcoding the requested AV content into the requested format, it may be advantageous to not only produce the AV content in a single requested bitrate, but to produce it, in parallel, in several different bitrates of appropriate setting, so that the client device, by selecting one of these different bitrates, can adapt to varying network conditions, in particular one or more lower bitrates to be used in case of transient network congestion.

## Claims

1. A method for streaming (107) a requested AV content from an AV content server (102) to a client device (101), comprising the steps of:
- receiving (106), from the client device (101), a streaming request comprising information to identify the requested AV content and a requested format;
- identifying, for the requested AV content, a set of precomputed formats that are available at a first AV content repository (104);
- selecting, among the precomputed formats, as a selected format that which best matches the requested format;
- retrieving (111), from the first AV content repository (104), the selected format of the requested AV content;
- streaming (107) the selected format of the requested AV content to the client device (101);
and if the selected format differs from the requested format, followed by the steps of:
- requesting (108), from a transcoding utility (103), that a master format of the requested AV content be transcoded into the requested format;
- receiving (109), from the transcoding utility (103), the requested format of the requested AV content;
- streaming (107) the requested format of the requested AV content to the client device (101); and
- stopping the streaming (107) of the selected format.

2. A **method** for presenting, at a client device (101), a requested AV content that is being streamed according to the method of claim 1, comprising in sequence:
- receiving (107), from the AV content server (102), the selected format of the requested AV content;
- scaling the selected format of the requested AV content into a presentable format of the requested AV content;
- presenting the presentable format of the requested AV content;
- receiving (107), from the AV content server (102), the requested format of the requested AV content; and
- seamlessly transiting from the presentation of the presentable format of the requested AV content to the presentation of the requested format of the requested AV content.

3. A **method** according to Claim 1, where the step of requesting is performed by
- retrieving (111), at the AV content server (102), the master format of the requested AV content from the first AV content repository (104); and
- providing (108) the master format of the requested AV content to the transcoding utility (103).

4. A **method** according to Claim 1, where the step of requesting is performed by
- providing (108), to the transcoding utility (103), the information to identify the requested AV content;
- retrieving (113, 112), from the first AV content repository (104) to the transcoding utility (103), the master format of the requested AV content.

5. A **method** according to Claim 1, where the step of requesting is performed by
- providing (108), to the transcoding utility (103), the information to identify the requested AV content;
- retrieving (114, 115), from a second AV content repository (105) to the transcoding utility (103), the master format of the requested AV content.

6. A **method** according to Claim 2, where the step of scaling comprises at least one of spatial upsampling, spatial downsampling, repetition of images and skipping of images.

7. A **method** according to Claim 1,
- where the step of requesting comprises deriving an estimated transiting position, and providing the estimated transiting position to the transcoding utility (103); and
- where the step of transcoding begins at an entry point that is close to and prior to the estimated transiting position.

8. A method according to Claim 1, wherein the requested format of the requested AV content comprises more than one stream having different data rate but otherwise identical format, in particular entry points at identical temporal positions.

9. A method according to Claim 2, wherein the requested format of the requested AV content comprises more than one stream having different data rate but otherwise identical format, in particular entry points at identical temporal positions; and wherein the operation of presenting the requested format of the requested AV content comprises selecting, according to network conditions, one of the more than one stream having different data rate but otherwise identical format, and presenting the selected stream.

10. A method according to Claim 1, wherein the step of streaming (107) the requested format is preceded by a step of notifying (107) the client device (101) about an imminent format change.

11. A method according to Claim 2, wherein the step of receiving (107) the requested format is preceded by a step of receiving (107), from the AV content server (102), the notification about the imminent format change.
